Europäisches Patentamt

**European Patent Office**

**Office européen des brevets**

(11) Veröffentlichungsnummer: **0 008 032**
B1

(12) **EUROPÄISCHE PATENTSCHRIFT**

(45) Veröffentlichungstag der Patentschrift:
20.01.82

(51) Int. Cl.³: **C 08 G 8/28**, C 08 G 8/20,
C 14 C 3/20

(21) Anmeldenummer: **79102601.6**

(22) Anmeldetag: **23.07.79**

(54) **Kondensationsprodukte aus Terphenylsulfonsäuren, Naphthalinsulfonsäuren, Bis-(4-hydroxyphenyl)-sulfon und Formaldehyd und ihre Verwendung als Gerbstoffe.**

(30) Priorität: **03.08.78 DE 2834121**

(43) Veröffentlichungstag der Anmeldung:
**20.02.80 Patentblatt 80/4**

(45) Bekanntmachung des Hinweises auf die Patenterteilung:
**20.01.82 Patentblatt 82/3**

(84) Benannte Vertragsstaaten:
**CH DE FR GB IT**

(56) Entgegenhaltungen:
**AT-B-233 723**
**AT-B-278 231**
**AT-B-294 296**
**AT-B-296 487**
**CH-A-156 126**
**CH-A-537 430**
**DE-C-611 671**
**DE-C-617 015**
**DE-C-934 188**
**US-A-3 423 452**

(73) Patentinhaber: **BAYER AG, Zentralbereich Patente, Marken und Lizenzen, D-5090 Leverkusen 1, Bayerwerk (DE)**

(72) Erfinder: **Schade, Franz, Dr., Steinknippen 3, D-5060 Bergisch-Gladbach (DE)**
Erfinder: **Nebeling, Reinhard, Dr., Berta-von-Suttner-Strasse 53, D-5090 Leverkusen 1 (DE)**
Erfinder: **Zinz, Bruno, Leopold-Gmelin-Strasse 7, D-5000 Köln 80 (DE)**

## Kondensationsprodukte aus Terphenylsulfonsäuren, Naphthalinsulfonsäuren, Bis-(4-hydroxyphenyl)-sulfon und Formaldehyd und ihre Verwendung als Gerbstoffe

Es ist bekannt, dass Naphthalinsulfonsäure, vorzugsweise $\beta$-Naphthalinsulfonsäure, mit Bis-(4-hydroxyphenyl)-sulfon und Formaldehyd zu homogenen wasserlöslichen Mischkondensationsprodukten kondensiert werden können, wenn je Mol Naphthalinsulfonsäure nicht mehr als 1 Mol Bis-(4-hydroxyphenyl)-sulfon und entsprechende Mengen Formaldehyd zur Mischkondensation eingesetzt werden. Die Verwendung dieser Produkte als Gerbstoffe ist z.B. aus der DE-PS 611 671 und DE-PS 617 015 bekannt.

Ebenso ist bekannt, dass Terphenylsulfonsäuren mit Formaldehyd zu Methylenbisterphenylsulfonsäuren reagieren können. Herstellung und Anwendung dieser Produkte als Nachgerbstoffe für mineralisch gegerbte Leder werden in der AT-PS 294 296 beschrieben. Sie haben keine Alleingerbwirkung, d.h. sie vermögen tierische Haut nicht in Leder umzuwandeln. Sie zeichnen sich gegenüber Nachgerbstoffen aus Naphthalinsulfonsäure-Formaldehyd-Kondensaten durch eine erhöhte Lichtechtheit aus.

Versuche, auch in den Alleingerbstoffen der DE-PS 611 671 und DE-PS 617 015 Naphthalinsulfonsäure durch Terphenylsulfonsäure zu ersetzen, scheiterten daran, dass unter den Reaktionsbedingungen der Patentschriften aus Terphenylsulfonsäuren, Bis-(4-hydroxyphenyl)-sulfon und Formaldehyd inhomogene, wasserunlösliche Kondensationsprodukte entstehen, die als Gerbstoffe ungeeignet sind.

Überraschenderweise zeigte sich nun, dass homogene, wasserlösliche Mischkondensationsprodukte hergestellt werden können, wenn Terphenylsulfonsäure und Naphthalinsulfonsäure gleichzeitig zur Mischkondensation mit Bis-(4-hydroxyphenyl)-sulfon und Formaldehyd eingesetzt werden.

Die vorliegende Erfindung betrifft wasserlösliche Kondensationsprodukte aus Terphenylsulfonsäuren, Naphthalinsulfonsäuren, Bis-(4-hydroxyphenyl)-sulfon und Formaldehyd oder Formaldehyd abgebenden Verbindungen, ihre Herstellung und ihre Verwendung als Gerbstoffe zur Herstellung von Leder und als Nachgerbstoffe für die Nachgerbung mineralisch gegerbter Leder.

Die Kondensationsprodukte sind insbesondere dadurch gekennzeichnet, dass sie aus den Komponenten im Molverhältnis

1 : 0,2–2 : 0,3–3,5 : 0,65–5,2

in saurem wässrigem Medium hergestellt werden.

Die Kondensationsreaktion wird beispielsweise bei 75–130 °C, vorzugsweise bei 95–115 °C, unter Rühren durchgeführt.

Nach beendeter Mischkondensation können die Reaktionsprodukte durch Zugabe wässriger Alkalihydroxid- oder Ammoniaklösungen auf einen pH-Wert von 3,5–7 abgestumpft und durch Eindampfen im Vakuum oder durch Sprühtrocknen isoliert werden.

Anstelle des reinen Bis-(4-hydroxyphenyl)-sulfons kann man auch rohes Bis-(4-hydroxyphenyl)-sulfon verwenden, das noch geringe Mengen Phenol und Isomere des Bis-(4-hydroxyphenyl)-sulfon enthält.

Formaldehyd kann in Form wässriger Lösungen oder als Paraformaldehyd eingesetzt werden; anstelle von Formaldehyd kann man auch Formaldehyd abgebende Verbindungen, wie Hexamethylentetramin, verwenden.

Die Terphenylsulfonsäuren und Naphthalinsulfonsäuren können nach bekannten Sulfonierungsverfahren hergestellt werden. Vorzugsweise werden zur Kondensation Sulfonierungsgemische verwendet.

Als besonders wirtschaftlich erweist sich das beanspruchte Herstellungsverfahren, wenn Terphenyl-Isomerengemische zur Sulfonierung verwendet werden, die bei der Diphenylsynthese des Benzols zwangsweise als Nebenprodukte anfallen und ausser den 3 Terphenyl-Isomeren Diphenyl und höhere Polyphenyle enthalten.

Die Herstellung geeigneter Terphenylsulfonsäuren ist beispielsweise aus der US-PS 2 004 546, aus J. Org. Chem. 14 (1949) S. 163–168 und J. Org. Chem. 31 (1966) S. 2467–2470 bekannt.

Anstelle von reinem Naphthalin können auch technische Naphthalinqualitäten, beispielsweise sogenanntes «Warmpressgut» verwendet werden. Geeignete Naphthalinsulfonsäuren können z.B. nach dem Verfahren der DE-PS 611 671 hergestellt werden.

Bevorzugt werden in der Kondensationsreaktion Sulfonsäuren verwendet, die durch Sulfonierung von Terphenyl-Naphthalin-Gemischen erhalten werden. Sie werden z.B. hergestellt, indem man pro Mol eines Terphenyl-Naphthalin-Gemisches 1,2–4,0 Mol, vorzugsweise 1,8–3,5 Mol, Sulfonierungsmittel, wie konzentrierte Schwefelsäure (D 1,8), 20%iges Oleum oder Chlorsulfonsäure 2–3 Stunden bei Temperaturen von 90–160 °C, vorzugsweise 120–145 °C, unter Rühren einwirken lässt.

Das für die Mischkondensation mit Bis-(4-hydroxyphenyl)-sulfon und Formaldehyd zu homogenen, wasserlöslichen Mischkondensaten erforderliche Mol-Verhältnis von Terphenylsulfonsäure zu Naphthalinsulfonsäure kann in den Grenzen 1 : 0,2–2,0, vorzugsweise 1 : 0,5–1,6, variieren je nach der Bis-(4-hydroxyphenyl)-sulfon-Menge, die ankondensiert werden soll.

Die erfindungsgemässen Mischkondensationsprodukte eignen sich nach partieller oder vollständiger Neutralisation mit wässriger Alkali- oder Ammoniaklösung und gegebenenfalls Eindampfen zur Trockne oder Sprühtrocknung, ausgezeichnet als Gerbstoffe zur Herstellung weisser, lichtechter Leder aus Hautmaterial, können aber darüber hinaus auch als Nachgerbstoffe für die Nachgerbung mineralischer gegerbter Leder, insbesondere zum Aufhellen und Füllen von Chromledern verwendet werden.

Gegenüber den Bergstoffen der DE-PS 611 671 zeichnen sie sich bei ihrer Verwendung als Alleingerbstoff dadurch aus, dass sie dem Leder einen unerwartet weichen Griff verleihen, und bei Verwendung zum Nachgerben von Chromledern zeichnen sie sich überraschenderweise gegenüber den aus der AT-PS 294 296 bekannten Kondensaten durch eine erhöhte Aufhellung des Leders aus.

Beispiel 1

In einer geschlossenen Rührapparatur, die mit Rückflusskühler und Thermometer ausgestattet ist, werden 230 g Terphenyl (technisches Isomerengemisch, das bei der Diphenylherstellung aus Benzol als Nebenprodukt entsteht) mit 90 g Naphthalin bei 120°C geschmolzen. Dann lässt man 372 g Schwefelsäure-Monohydrat (D 1,8) zulaufen und sulfiert unter ständigem Rühren 3 Stunden bei 140°C. Anschliessend lässt man auf 110°C abkühlen und langsam gegebenenfalls unter Aussenkühlung 300 g Wasser zulaufen. Am Ende der Wasserzugabe sollte die Temperatur der Reaktionsmischung 95–100°C betragen. Bei dieser Temperatur werden 250 g Bis-(4-hydroxyphenyl)-sulfon eingetragen und anschliessend 120 g Formaldehyd (30%ig) bei 80°C zulaufen lassen. Unter ständigem Rühren wird bei 115°C kondensiert. Während dieser Mischkondensation geht das Bis-(4-hydroxyphenyl)-sulfon vollständig in Lösung und die Viskosität des Reaktionsgemisches steigt mit zunehmendem Kondensationsgrad an. Nach ca. 3–4stündiger Kondensation enthält das Reaktionsprodukt keinen freien Formaldehyd mehr und wird nun je nach Verwendungszweck mit wässriger Alkalihydroxidlösung oder Ammoniaklösung bis zum gewünschten pH-Wert neutralisiert. Ist eine Verwendung als Austauschgerbstoff vorgesehen, wird die Neutralisation z.B. mit 45%iger wässriger Natronlauge bis zum pH-Wert von 3,5 vorgenommen. Sollen die Produkte zur Nachgerbung mineralisch gegerbter Leder verwendet werden, so wird man die Neutralisation mit Alkali bis zu einem pH-Wert von 6,5–7,0 vornehmen.

Die auf diese Weise erhaltenen Lösungen oder die daraus durch Sprühtrocknung in Pulverform gewonnenen Kondensationsprodukte können gegebenenfalls zusammen mit aliphatischen und/oder aromatischen Mono- oder Dicarbonsäuren oder in Kombination mit anderen Gerbstoffen zur Alleingerbung von Hautmaterial oder zur Nachgerbung mineralisch gegerbter Leder verwendet werden. Charakteristisch für die mit diesen Produkten gegerbten bzw. nachgegerbten Leder sind hervorragende Fülle und Weichheit sowie eine ausserordentlich gute Lichtechtheit.

Beispiel 2

(Prozentangaben in diesem Beispiel beziehen sich auf das Blössengewicht)

Nach praxisüblichen Methoden aus gesalzenen Kalbfellen hergestellte Kalbsblössen werden in einem Gerbfass in 200% Flotte mit 25% Trockensubstanz eines nach Beispiel 1 hergestellten Kondensationsproduktes behandelt, das speziell für die Verwendung als Alleingerbstoff mit wässriger Ammoniaklösung bis pH 3,5 abgestumpft und durch Zugabe von Eisessig auf eine Säurezahl von 100 eingestellt worden ist. Nach einer Gerbdauer von insgesamt 6 Stunden ist der Gerbstoff vollständig aufgezogen. Nach praxisüblicher Fettung, Trocknung und mechanischer Bearbeitung werden volle und weiche Leder erhalten.

Beispiel 3

(Prozentangaben in diesem Beispiel beziehen sich auf das Falzgewicht)

Prixisüblich chromgegerbte Rindleder einheitlichen Ursprungs werden nach der Chromgerbung auf 1,6–1,8 mm Stärke gefalzt und nach gründlichem Spülen bis zu einem pH-Wert im feuchten Leder von 3,8–4,2 (ermittelt durch Anfärben des Lederquerschnitts mit Bromkresolgrün-Lösung) neutralisiert. Anschliessend lässt man im rotierenden Gerbfass bei einer Flottenlänge von 100% 5% eines nach Beispiel 1 speziell für die Verwendung als Nachgerbstoff für mineralisch gegerbte Leder hergestellten Kondensationsproduktes einwirken, dessen Lösung mit wässriger Ammoniaklösung bis zu einem pH-Wert von 6,5 abgestumpft und sprühgetrocknet wurde. Nach ca. 30 Min. ist der Gerbstoff vollständig vom Leder aufgenommen. Üblicherweise wird nun gegebenenfalls im gleichen Bad gefärbt und gefettet. Nach praxisüblicher Trocknung und mechanischer Bearbeitung werden volle und weiche Leder mit sehr gutem Aufhelleffekt, ausgezeichneter Egalität und guter Lichtechtheit erhalten.

Beispiel 4

Unter gleichen Bedingungen wie im Beispiel 1 beschrieben werden

230 g Terphenyl (Isomerengemisch) und
64 g Naphthalin (Warmpressgut) bei

120°C geschmolzen und mit 301 g Schwefelsäure-Monohydrat 3 Stunden bei 140°C sulfoniert. Nach Abkühlen der Reaktionsmischung auf 120°C wird mit 300 g Wasser verdünnt. Dann werden 200 g Bis-(4-hydroxyphenyl)-sulfon eingetragen und mit 105 g Formaldehyd (30%ig) so lange bei 100–105°C kondensieren lassen, bis der Formaldehyd restlos verbraucht ist. Das Reaktionsprodukt wird je nach vorgesehenem Verwendungszweck mit wässriger Ammoniak-Lösung bis pH 3,5 oder 6,5 neutralisiert und gegebenenfalls nach Zusatz von Glutarsäure, Adipinsäure oder sonstigen unter Normalbedingungen festen organischen Säuren und nach Einstellung auf ca. 50–55% Konzentrations sprühgetrocknet.

Beispiel 5

In einem Dreihalskolben, der mit Rührer, Rückflusskühler und Kontaktthermometer ausgestattet ist, werden 730 g Terphenyl-Naphthalinsulfonsäuren-Gemisch, das durch Sulfonierung von 230 g Terphenylisomeren-Gemisch und 128 g Naphthalin «Warmpressgut» mit 372 g Schwefelsäure-Monohydrat bei 145°C im Laufe von 3 Stunden entsteht, nach Abkühlen und Verdünnen mit 500 g Bis-(4-hydroxyphenyl)-sulfon und 210 g Formaldehyd in ca. 10 Stunden bei 105–110°C zu einem homogenen wasserlöslichen Mischkondensat umgesetzt. Nach Abstumpfen bis pH 3,5 mit Ammoniak und Einstellen einer Säurezahl von 120 (= mg KOH/g bezogen auf 100%ige Ware) wird eine Gerbstofflösung mit ausgezeichneten gerberischen Eigenschaften für die Alleingerbung erhalten. Damit hergestellte Leder sind voll, weich und gut lichtecht.

Beispiel 6

a) Es werden 128 g Naphthalin aufgeschmolzen und mit 140 g Schwefelsäure (100%ig) 2 Stunden bei ca. 145°C sulfoniert.

b) Es werden 230 g Terphenyl technisch aufgeschmolzen und mit 254 g Schwefelsäure (100%ig) 3 Stunden bei ca. 165°C sulfoniert.

Die unter a) und b) hergestellten Gemische von Naphthalinsulfonsäuren und Terphenylsulfonsäuren werden vereinigt, auf 100°C gekühlt, mit 450 g Wasser verdünnt und unter Zusatz von 250 g Bis-(4-hydroxyphenyl)-sulfon und 120 g Formaldehyd (30%ig) unter Rückfluss bei ca. 110°C 5–6 Stunden kondensiert.

Das Kondensationsprodukt wird mit ca. 300 g 25%igem Ammoniakwasser auf pH 3,5 eingestellt und nach evtl. weiterem Verdünnen mit Wasser getrocknet (sprühgetrocknet).

**Patentansprüche**

1. Kondensationsprodukte erhalten durch Mischkondensation von Terphenylsulfonsäuren, Naphthalinsulfonsäuren, Bis-(4-hydroxyphenyl)-sulfon und Formaldehyd oder Formaldehyd abgebenden Verbindungen in saurem wässrigem Medium.

2. Kondensationsprodukte gemäss Anspruch 1, erhalten durch Mischkondensation von Terphenylsulfonsäuren, Naphthalinsulfonsäuren, (Bis-(4-hydroxyphenyl)-sulfon und Formaldehyd oder Formaldehyd abgebende Verbindungen im Molverhältnis
1:0,2–2,0:0,3–3,5:0,65–5,2.

3. Kondensationsprodukte gemäss Anspruch 1 erhalten durch Mischkondensation bei Temperaturen von 75–130°C, vorzugsweise 95–115°C.

4. Kondensationsprodukte gemäss Anspruch 1 erhalten aus Sulfonsäuren, die durch Mischsulfonierung von Terphenyl und Naphthalin hergestellt wurden.

5. Verwendung der Kondensationsprodukte gemäss Ansprüchen 1–4 als Gerbstoffe zur Herstellung von Leder und Nachgerbstoffe für die Nachgerbung mineralisch gegerbter Leder.

**Claims**

1. Condensation products obtained by co-condensation, in an acid aqueous medium, of terphenylsulphonic acids, naphthalenesulphonic acids, bis (4-hydroxyphenyl) sulphone and formaldehyde or compounds which release formaldehyde.

2. Condensation products according to Claim 1, obtained by co-condensation of terphenylsulphonic acids, naphthalenesulphonic acids, bis-(4-hydroxyphenyl) sulphone and formaldehyde or compounds which release formaldehyde, in the molar ratio
1:0.2–2.0:0.3–3.5:0.65–5.2.

3. Condensation products according to Claim 1, obtained by co-condensation at temperatures of 75–130°C, preferably 95–115°C.

4. Condensation products according to Claim 1, obtained from sulphonic acids which have been prepared by mixed sulphonation of terphenyl and naphthalene.

5. Use of the condensation products according to Claims 1–4 as tanning agents for the production of leather and as re-tanning agents for re-tanning mineral-tanned leather.

**Revendications**

1. Produits de condensation obtenus par condensation mixte d'acides terphéhylesulfoniques, d'acides naphtalènesulfoniques, de bis-(4-hydroxyphényl)-sulfone et de formaldéhyde ou de composés libérant du formaldéhyde en milieu aqueux acide.

2. Produits de condensation selon la revendication 1, obtenus par condensation mixte d'acides terphénylesulfoniques, d'acides naphtalènesulfoniques, de bis-(4-hydroxyphényl)-sulfone et de formaldéhyde ou de composés libérant du formaldéhyde dans le rapport molaire
1:0,2–2,0:0,3–3,5:0,65–5,2.

3. Produits de condensation selon la revendication 1, obtenus par condensation mixte à des températures de 75–130°C, de préférence 95–115°C.

4. Produits de condensation selon la revendication 1, obtenus à partir d'acides sulfoniques qui sont préparés par sulfonation mixte de terphényle et de naphtalène.

5. Utilisation des produits de condensation selon les revendications 1–4 comme tannins pour la préparation de cuirs et d'agents de retannage pour le retannage de cuirs tannés par un tannin minéral.